# EUROPÄISCHE PATENTSCHRIFT

(11) **EP 4 072 823 B1**
(45) Veröffentlichungstag und Bekanntmachung des Hinweises auf die Patenterteilung: **09.10.2024**
(21) Anmeldenummer: 20829818.2
(22) Anmeldetag: 11.12.2020
(51) Int. Cl.: B29C 49/46, B29C 49/42, B65B 55/10, B67C 7/00, B67C 3/22

(54) **VERFAHREN UND ANLAGE ZUR HERSTELLUNG UND BEHANDLUNG STERILER KUNSTSTOFFBEHÄLTER**
METHOD AND INSTALLATION FOR MANUFACTURING AND TREATING STERILE PLASTIC CONTAINERS
PROCÉDÉ ET INSTALLATION POUR FABRIQUER ET TRAITER DES RÉCIPIENTS EN PLASTIQUE STÉRILES

(30) Priorität: 13.12.2019 DE 102019008631
(43) Veröffentlichungstag der Anmeldung: 19.10.2022
(73) Patentinhaber: KHS GmbH, 44143 Dortmund (DE)
(72) Erfinder: GERHARDS, Martin, 22089 Hamburg (DE)
(74) Vertreter: Greiche, Albert
(86) Internationale Anmeldenummer: PCT/EP2020/085675
(87) Internationale Veröffentlichungsnummer: WO 2021/116364

(56) Entgegenhaltungen:
- EP-B1- 0 996 530
- US-A1- 2011 203 579
- US-A1- 2013 040 009
- US-A1- 2013 078 327
- US-A1- 2014 260 099

## Beschreibung

Die Erfindung betrifft ein Verfahren und eine Anlage zur Herstellung und Behandlung steriler Kunststoffbehälter, bei dem Vorformlinge aus einem thermoplastischen Material im Bereich einer Heizstrecke erwärmt und anschließend durch pneumatischen oder hydraulischen Druck zu Behältern umgeformt werden, und wobei die Vorformlinge oder die Behälter oder beide sterilisiert werden und mindestens eine keimarme Zone durchlaufen, die von einer Einhausung umgeben ist.

Die Herstellung von Kunststoffbehältern wie Kunststoffflaschen erfolgt überwiegend unter Verwendung von Vorformlingen (Preforms), die aus einem thermoplastischen Material wie PET (Polyethylenterephthalat) bestehen. Die Vorformlinge werden hierbei durch pneumatischen Druck (Blasdruck) oder hydraulischen Druck (insbesondere den Druck eines abzufüllenden Fluids) zu den gewünschten Behältern geformt.

Bevor jedoch das Füllgut in die fertigen Behälter gefüllt wird, müssen die Vorformlinge und/oder die fertigen Behälter sterilisiert werden. Zu diesem Zweck sind Verfahren und Vorrichtungen bekannt, mit denen die Vorformlinge bzw. Behälter mit einem Sterilisationsmittel behandelt werden. Als Sterilisationsmedien kommen grundsätzlich alle Medien in Betracht, die zur Abtötung von Mikroorganismen geeignet sind, insbesondere Chemikalien wie Wasserstoffperoxid, Ozon und Chlordioxid. Ein Einsatz von Sterilisationsmitteln erfolgt häufig in Form von Sterilisationsdämpfen (Aerosolen) mit erhöhter Temperatur von etwa 100 - 130 °C. Verfahren und Vorrichtungen dieser Art sind in DE 10 2010 032 336, EP 1 941 913 sowie EP 2 394 950 beschrieben.

Eine Sterilisation der Kunststoffbehälter bzw. der Vorformlinge erfolgt in der Regel als trockene Sterilisation unter Verwendung von Wasserstoffperoxid. Geeignet sind aber auch Chemikalien wie Ozon oder Chlordioxid. Neben der trockenen Sterilisation kommt aber auch eine Nass-Sterilisation zum Beispiel unter Verwendung von Peressigsäure in Betracht.

Bei einer Sterilisation von Vorformlingen (Preformsterilisation) kann auf eine zusätzliche Sterilisation der fertigen Kunststoffbehälter verzichtet werden. Da die zu sterilisierende Preform-Fläche gegenüber der zu sterilisierenden Fläche der fertigen Kunststoffbehälter kleiner ist, wird durch eine Preformsterilisation auch eine Reduzierung des Sterilisationsmittelverbrauchs erreicht.

Ein Vorteil der trockenen Sterilisation besteht darin, dass unterschiedlichste Flaschen- und Verschlussvarianten sterilisiert werden können. Ein Wasserstoffperoxid-Aerosol wird hierzu in die Kunststoffbehälter ein- bzw. auf die Verschlüsse aufgesprüht und nach der Kondensation auf der Behälter- bzw. Verschlussoberfläche durch sterile Heißluftzufuhr wieder entfernt. Ergebnis sind trockene und sterile Behälter- und Verschlussoberflächen. Die Außenseiten der Kunststoffbehälter lassen sich mit einem Wasserstoffperoxid-Aerosol ebenfalls sterilisieren.

Das Wasserstoffperoxid-Aerosol kann in jede Kunststoffflasche durch eine in der Kunststoffflasche positionierte und unmittelbar unterhalb des Flaschenhalses endende Lanze eingebracht werden. Die Aerosoleinsprühung stellt sicher, dass alle Bereiche in der Flasche mit Wasserstoffperoxid beaufschlagt sind. Dies erfolgt selbst bei gerippten, geprägten und rechteckig gestalteten Flaschen sowie bei Flaschen mit stark strukturieren Oberflächen. Das für den Sterilisationsvorgang verwendete Wasserstoffperoxid gelangt abhängig von Flaschenform und -größe mit einer Temperatur von ca. 100 °C in die nicht vorgewärmte Kunststoffflasche, wodurch sich im Flascheninneren ein durchgängiger Sterilisationsfilm ausbildet. Die Außensterilisation der Kunststoffflasche geschieht durch direktes Aufsprühen von Wasserstoffperoxid auf die Flaschenwand. Anschließend erfolgt üblicherweise eine rückstandsfreie oder zumindest rückstandsarme Abtrocknung von Wasserstoffperoxid zum Beispiel innerhalb eines Trocknungskarussells oder anderer Trocknungs- und/oder Heizvorrichtungen. Eine rückstandsfreie oder zumindest rückstandsarme Entfernung des Wasserstoffperoxids ist alternativ oder zusätzlich auch durch den normalen Verdunstungsprozess beim Transport der Flasche möglich.

Eine Herstellung steriler Kunststoffflaschen, bei der Vorformlinge und/oder Kunststoffflaschen mit Wasserstoffperoxid und steriler Luft behandelt werden, um die Vorformlinge und/oder die Kunststoffflaschen zu sterilisieren, ist auch in EP 2 407 417 A1 beschrieben. Entsprechende Behandlungseinheiten sind hierzu in einem Isolatorgehäuse untergebracht, um einen begrenzten Raum für die Behandlungsmedien zu schaffen.

Infolge der Sterilisation kann es vorkommen, dass die verwendeten Sterilisationsmittel nicht nur die zu sterilisierenden Vorformlinge oder fertigen Kunststoffflaschen erreichen, sondern auch in Anlagenteile strömen, wo sie unerwünscht sind und Schäden verursachen können. Möglich ist sogar, dass die Sterilisationsmittel aus der Anlage austreten und in offene Arbeitsbereiche gelangen. Dies könnte zu Gesundheitsschäden bei Personen führen, die den Sterilisationsmedien dann unmittelbar ausgesetzt sind.

Werden Kunststoffflaschen bzw. Vorformlinge nach ihrer Sterilisation weiterbehandelt und anderen Behandlungsstationen zugeführt, wie beispielsweise einer Übergabestation, einer Blasstation oder einer Füllstation, ist auch dort darauf zu achten, dass etwaig eingeschleppte Sterilisationsmittel nicht die Produktionshalle ausströmen können. Darüber hinaus ist es wichtig, dass es in den jeweiligen Behandlungsstationen nicht zu einer nachträglichen Kontamination der Kunststoffflaschen kommt. In der Umgebung der Kunststoffflaschen müssen daher aseptische Bedingungen herrschen, d. h., ein Eindringen von Mikroorganismen in diese Bereiche muss vermieden werden.

In aseptischen Zonen hat es sich daher bewährt, die Kunststoffflaschen von einem Behandlungsmedium umströmen zu lassen, wie zum Beispiel mit steriler Luft. Eine derartige Maßnahme sieht EP 2 407 417 A1 ebenfalls vor. In dem Isolatorgehäuse wird hierzu eine von oben nach unten gerichtete Strömung erzeugt. Die Behandlungsmedien treten über Zuluftstutzen von oben in das Isolatorgehäuse ein und im unteren Bereich über ein Sammelrohr wieder aus. Ein dauerhafter Überdruck im Inneren des Isolatorgehäuses soll dafür sorgen, dass keine Kontaminationen von außen auftreten.

Bei einer Absaugung von Behandlungsmedien (zum Bespiel steriler Luft oder Sterilisationsmedium) kann es jedoch vorkommen, dass innerhalb einzelner Bereiche der jeweiligen Behandlungsräume ein Unterdruck entsteht, wodurch es zu einem Ansaugen von Außenluft und damit verbunden zum Eindringen unerwünschter Keime in die jeweiligen Behandlungsräume kommen kann.

DE 10 2012 106 532 A1 beschreibt eine Vorrichtung zum Sterilisieren von Verschlüssen mit einer Behandlungskammer, an die sich zwei Absaugvorrichtungen anschließen. Über diese Absaugvorrichtungen wird eingebrachtes Sterilisationsmedium abgesaugt, so dass eine vollständige Durchspülung der Behandlungskammer mit Sterilisationsmedium sichergestellt ist.

Ein Absaugen von Sterilisationsmedium stellt aber auch bei dieser Vorrichtung ein Kontaminationsrisiko dar. Darüber hinaus kann auch hier nicht ausgeschlossen werden, dass Sterilisationsmedium aus der Sterilisationszone austritt.

Gemäß US 2011/0203579 A1 wird ein Ofen für die thermische Konditionierung von Vorformlingen aus einem thermoplastischen Material beschrieben, mit mindestens einem Kühlkreislauf mit Luftstromzirkulation, der sich sequentiell von der stromaufwärtigen Seite zur stromabwärtigen Seite durch mindestens einen Kühllufteinlassbereich erstreckt, einem Heizbereich, in dem ein Vorformlingsheizelement und der Kühlluftstrom, der durch Belüftungselemente projiziert wird, und einen Luftabzugsbereich, mit dem mindestens eine Luftabzugsleitung verbunden ist, wobei der Ofen ein Begrenzungsgehäuse aufweist, das sich von der Luftabzugsleitung bis mindestens zum Heizbereich erstreckt und in der Lage ist, mindestens den Heizbereich von der Außenseite des Ofens zu isolieren, um die Verschmutzung des Ofeninneren durch luftgetragene Schmutzpartikel zu verhindern.

Aus US 2013/0078327 A1 ist eine Anlage zur Herstellung von Behältern bekannt, umfassend einen Luftkreislauf, der ein Wiederverwendungsverfahren anwendet, das mindestens die folgenden aufeinanderfolgenden Schritte umfasst: Absaugen von gefilterter Luft aus einem Ofen, nachdem die Luft in diesem verwendet wurde, um mindestens einen Teil der Vorformlinge zu kühlen; Behandeln des Sterilisierungsmittels, das in der abgesaugten Luft vorhanden ist, die aus der Sterilisierung der Vorformlinge resultiert; und Zurückführen der abgesaugten und behandelten Luft in den Industriebereich, in dem die Anlage installiert ist. Ein Verfahren zur Luftrückführung wird ebenfalls beschrieben.

US 2014/0260099 A1 beschreibt eine Vorrichtung zur Behandlung mindestens eines Behälters, bevorzugt zum Befüllen mindestens eines Behälters mit einem Füllprodukt und/oder zum Umformen eines Behälters, umfassend einen eine definierte Atmosphäre umfassenden Isolatorraum, in welchem die Behandlung des Behälters vorgenommen wird, und mindestens eine Behälterschleuse zum Einbringen des Behälters in den Isolatorraum oder zum Ausbringen des Behälters aus dem Isolatorraum, weiterhin eine Absaugvorrichtung zum Absaugen von Luft aus der Behälterschleuse und aus dem Isolatorraum, sowie eine Zuluftaufbereitung zur Aufbereitung vom dem Isolatorraum zuzuführender Luft, wobei die Absaugvorrichtung so mit der Zuluftaufbereitung verbunden ist, dass zumindest ein Teil der aus der Behälterschleuse und/oder dem Isolatorraum abgesaugten Luft der Zuluftaufbereitung zur erneuten Aufbereitung zugeführt wird.

In der DE 698 10 631 T2 wird ein Verfahren beschrieben, bei dem in einer Anlage zur Herstellung von Behältern durch Blasen oder Ziehen und Blasen von vorgewärmten Vorformlingen sterilisierte Behälter erhalten werden, indem die Vorformlinge mit einem geeigneten wärmeaktivierten Sterilisationsprodukt benetzt werden und das Produkt durch Heizmittel aktiviert wird, die auch den Vorformlingen ein geeignetes Heizprofil verleihen, um sie für das Blasen vorzubereiten.

US 2013/0040009 A1 wird eine Blasmaschine zum Umformen von Kunststoffvorformlingen zu Kunststoffbehältnissen beschrieben, umfassend eine Vielzahl an Blasstationen mit Blasformträgern zum Halten von Blasformen, umfassend einen Reinraum zum Anordnen bzw. Transportieren der Blasstationen unter aseptischen Bedingungen und umfassend einen Rüstzugang des Reinraums zum Rüsten der Blasformträger mit Blasstationskomponenten, bei welcher der Rüstzugang wenigstens einen Sterilraum umfasst, welcher dem Reinraum mit der Vielzahl an Blasstationen umgebungsseitig vorgelagert ist.

Aufgabe der vorliegenden Erfindung ist es daher, die bei der Herstellung und Behandlung steriler Kunststoffbehälter auftretende Kontaminationsgefahr weiter zu reduzieren und etwaig ausgetretene Sterilisationsmedien wieder aufzunehmen.

Erfindungsgemäß erfolgt die Lösung der gestellten Aufgabe durch ein Verfahren nach Anspruch 1.

Als sterile Kunststoffbehälter im Sinne der vorliegenden Erfindung werden solche Kunststoffbehälter verstanden, die, bzw. deren Vorformlinge, einer Sterilisationsbehandlung zur Abtötung von Mikroorganismen unterzogen wurden. Anschließend können die sterilen Kunststoffbehälter zur weiteren Behandlung einzelne keimarme Zonen durchlaufen, beispielsweise zur Befüllung unter aseptischen Bedingungen. In einer keimarme Zone findet im Gegensatz zu einer Sterilisationszone keine Sterilisationsbehandlung statt, vielmehr ist eine keimarme Zone darauf ausgelegt, einen Transfer von Mikroorganismen zu verhindern.

Bei den Kunststoffbehältern handelt es sich insbesondere um Getränkebehälter wie Kunststoffflaschen. Die weitere Beschreibung der Erfindung kann sich daher auf Kunststoffflaschen beziehen, ohne dass damit eine Beschränkung auf diese Gegenstände verbunden ist.

Behandlungsstationen, die die Vorformlinge bzw. die fertigen Kunststoffflaschen zur Sterilisation oder danach durchlaufen, müssen keimfrei gehalten werden. Hierzu werden eine oder mehrere keimarme Zonen ausgebildet. Innerhalb einer keimarmen Zone kann beispielsweise eine Übergabestation, eine Blasstation, eine Sterilisationsstation oder einer Füllstation angeordnet sein.

Die keimarme Zone ist durch eine permanente Einleitung von sterilem Behandlungsmedium, vorzugsweise Sterilluft, gekennzeichnet. Hierbei wird für das sterile Behandlungsmedium eine positive Verdrängerströmung erzeugt, die ein Eindringen von Keimen in die keimarme Zone verhindert.

Werden Behandlungsmedien aus einer keimarmen Zone abgesaugt, kann es jedoch, wie in der Beschreibungseinleitung dargestellt, zu Kontaminationen kommen. Erfindungsgemäß lassen sich diese Kontaminationen vermeiden, wenn das Behandlungsmedium über einen Schleusenraum abgesaugt wird, durch den zugleich Luft aus der äußeren Umgebung des Außengehäuses gelangt. Hierdurch wird in der keimarmen Zone kein Unterdruck erzeugt, der zum ungewollten Einströmen von Außenluft führt. In den Schleusenraum eintretende Außenluft stellt keine Kontaminationsgefahr dar, weil in dem Schleusenraum gegenüber der Sterilisations- oder keimarmen Zone Unterdruck herrscht und die in den Schleusenraum eingetretene Außenluft somit nicht in die Sterilisations- oder keimarme Zone gelangen kann. Sollte es im Produktionsverlauf wider Erwarten zu einem Austreten von Sterilisationsmedien kommen, werden in die Maschine oder nach außen gelangte Sterilisationsmedien ebenfalls abgesaugt.

Damit jedoch Behandlungsmedium aus der keimarmen Zone und zugleich Luft aus der äußeren Umgebung des Außengehäuses über den Schleusenraum abgesaugt werden kann, muss der Schleusenraum über eine Ansaugöffnung verfügen, die in geeigneter Weise positioniert ist. Als vorteilhaft hat sich hierbei erwiesen, den Schleusenraum nach unten hin zu öffnen oder diesen mit einer oder mehreren entsprechend positionierten Ansaugöffnungen zu versehen. Hierbei können die Öffnungen mit Filtern abgedeckt sein, um Verschmutzungen der Anlagenverkleidung zu vermeiden. Wird die keimarme Zone auf Füße oder andere Distanzelemente gestellt, kann die angestrebte Absaugung von Behandlungsmedium und Außenluft an der Unterseite der keimarmen Zone erfolgen.

Das Außengehäuse ist so ausgebildet und dimensioniert, dass es die keimarme Zone und wesentliche Teile der darin untergebrachten Einrichtungen umgibt. So kann beispielsweise eine Übergabeeinrichtung, eine Heizeinrichtung zur Temperierung von Vorformlingen, eine Ausformeinrichtung mit einem Blasrad zur Umformung der Vorformlinge in Behälter, eine Sterilisationseinrichtung sowie eine Fülleinrichtung von dem Außengehäuse umgeben sein. In bevorzugter Weise ist das Außengehäuse über die gesamte Maschinenhöhe ausgebildet und im Wesentlichen quaderförmig.

Die Ausbildung des Außengehäuses bietet insbesondere den Vorteil, dass auch ein so genanntes "Raum in Raum"-Konzept verwirklicht werden kann. Hierbei befindet sich innerhalb des Außengehäuses eine möglichst klein dimensionierte Sterilisationszone, die gegenüber dem umgebenden Maschinenraum nochmals geschützt ist.

Behandlungsmedien gemäß der vorliegenden Erfindung sind daher Sterilisationsmedien ebenso wie sterile gasförmige Medien, insbesondere Luft, die in eine keimarme Zone eingeleitet werden.

Erfindungsgemäß ist der Schleusenraum zwischen dem Außengehäuse und einem Innengehäuse ausgebildet, die beide die keimarme Zone umgeben. Das Außengehäuse ist in diesem Fall zu dem Innengehäuse beabstandet, wobei ein Abstand zwischen allen oder nur einzelnen Gehäuseseiten und/oder den Gehäusedecken vorgesehen sein kann. In bevorzugter Weise ist der Schleusenraum nur zwischen Vertikalseiten von Außen- und Innengehäuse ausgebildet.

Gemäß einer anderen Ausgestaltung wird der Schleusenraum am unteren Ende des Außengehäuses durch einen Kanal ausgebildet. Ein derartiger Schleusenraum ist kleiner als ein Schleusenraum, der sich über gesamte Seiten des Außengehäuses erstreckt. Er bietet Vorteile gegenüber der doppelwandigen Variante, da Absperreinrichtungen an dem Außengehäuse, wie Türen, Klappen, Rollos und dergleichen nicht doppelwandig ausgestaltet sein müssen. Der kanalförmige Schleusenraum verläuft in bevorzugter Weise entlang aller Innenwände am unteren Ende des Außengehäuses.

Nach einer weiteren Ausgestaltung der Erfindung weist der Schleusenraum eine nach unten gerichtete Ansaugöffnung auf. Die Ansaugöffnung kann sich hierbei über die gesamte Länge einer Wand des Außengehäuses erstrecken. Anstelle einer durchgehenden Ansaugöffnung können aber auch einzelne, kleinere Ansaugöffnungen über die Unterseite des Kanals verteilt sein.

Zur Einleitung von Behandlungsmedien in die keimarme Zone ist vorgesehen, dass ein gasförmiges Behandlungsmedium zur Sterilisation über eine Filtervorrichtung in die keimarme Zone geleitet wird. Als gasförmiges Behandlungsmedium kommt insbesondere Luft in Betracht.

Die Filtervorrichtung weist mindestens ein Sterilfilter auf, so dass Keime (Mikroorganismen) sowie feste Partikel, an denen Mikroorganismen anhaften können, aus der keimarmen Zone ferngehalten werden. Als Filter kommen HEPA-Filter (High Efficiency Particulate Air Filter) in Betracht ebenso wie sterilisierbare Kerzenfilter.

Um die oben genannte Verdrängerströmung zu erzeugen, findet die Einleitung des gasförmiges Behandlungsmediums vorzugsweise von oben, das heißt, durch die Decke des Außengehäuses und ggf. durch die Decke des Innengehäuses zum Beispiel über Anschlussflansche statt. Dabei können je nach Größe und Geometrie der keimarmen Zone ein- oder mehrere Einlassöffnungen vorgesehen sein, die über gesamte Decke verteilt sein können. Selbst die Seitenwände des Außen- und ggf. des Innengehäuses können insbesondere in oberen Bereichen derartige Einlassöffnungen aufweisen.

Die der vorliegenden Erfindung zugrunde liegende Aufgabe wird ebenfalls gelöst durch eine Anlage nach Anspruch 4.

Zur weiteren Beschreibung der erfindungsgemäßen Anlage sowie der angestrebten Absaugung von Behandlungsmedium wird auf die obigen Ausführungen verwiesen.

Nach einer bevorzugten Ausgestaltung der Erfindung wird die Einhausung auf eine Aufstellfläche gestellt, zu der hin die Ansaugöffnung(en) des Schleusenraums gerichtet ist(sind). Füße oder andere Distanzelemente sorgen dafür, dass durch die Beabstandung zur Aufstellfäche die angestrebte Absaugung von Behandlungsmedium und Außenluft erfolgen kann. Die Aufstellfläche ist vorzugsweise der Boden des Aufstellortes. Es ist allerdings auch denkbar, dass die Aufstellfläche zumindest bereichsweise von einer Grundplatte ausgebildet ist.

Darüber hinaus können in der in einer keimarmen Zone eine oder mehrere Behandlungsstationen zur Behandlung der Vorformlinge und/oder der Kunststoffbehälter untergebracht sein. Das bedeutet, dass eine Einhausung eine oder mehrere Behandlungsstationen umgeben kann, wobei es möglich ist, dass innerhalb nur einer Einhausung einzelne Behandlungsstationen wiederum durch Schleusen oder andere Durchgangssysteme voneinander getrennt sein können.

Eine Zuordnung von nur einzelnen Behandlungsstationen zu einzelnen Einhausungen bietet den Vorteil, dass Zu- und Abführungen von Behandlungsmedien ganz individuell für die einzelnen Behandlungszonen geregelt werden können.

Bevorzugte Ausgestaltungen der Erfindung werden nachfolgend anhand der Zeichnungen beschrieben.

Es zeigt
Fig. 1 eine schematische Ansicht von zwei Einhausungen 2, 2' mit jeweils einem Schleusenraum 4, 4' zwischen Außengehäuse 3, 3' und Innengehäuse 5, 5' sowie
Fig. 2 eine schematische Ansicht von zwei Einhausungen 2, 2' mit jeweils einem Schleusenraum 4, 4' in Form eines Kanals 7, 7' am unteren Ende 6, 6' des Außengehäuses 3, 3'.

Bevorzugte Ausführungsformen der Erfindung werden nachfolgend anhand der Zeichnungen beschrieben.

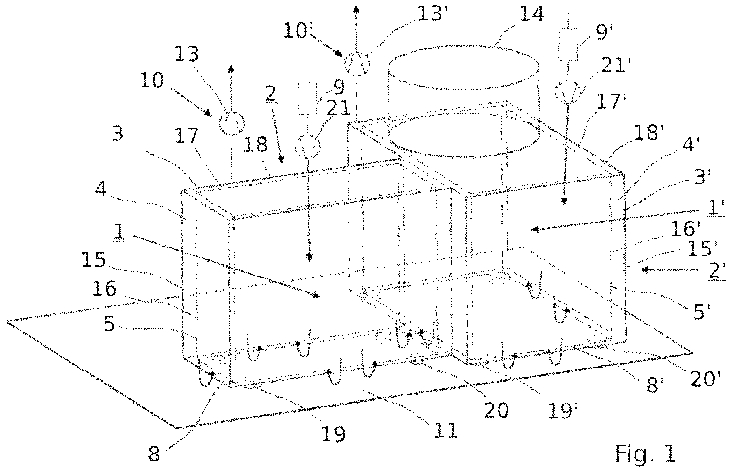

Fig. 1 zeigt zwei Einhausungen 2, 2' mit jeweils einem Schleusenraum 4, 4' zwischen Außengehäuse 3, 3' und Innengehäuse 5, 5', der hier zwischen allen vier Vertikalseiten von Außen- und Innengehäuse 3, 3', 5, 5' ausgebildet ist. Die Einhausungen 2, 2' umgeben jeweils eine keimarme Zone 1, 1'. In der ersten keimarmen Zone 1 ist eine Sterilisationseinrichtung untergebracht, in der zweiten keimarmen Zone 1' eine Fülleinrichtung. Da Sterilisations- und Fülleinrichtungen auch von ihrem Aufbau her grundsätzlich bekannt sind, werden sie hier nicht näher dargestellt.

Nach erfolgter Sterilisation kann vorgesehen sein, die Behälter einer Trocknungsstation zuzuführen, die ihrem Aufbau her ebenfalls bekannt ist. Eine derartige Trocknungsstation kann sich in derselben Einhausung 2 befinden wie die Sterilisationseinrichtung. Von einer Trocknungsstation können die sterilen Behälter zur Fülleinrichtung transportiert werden. Je nachdem welche Einrichtungen in der keimarmen Zone 1, 1' untergebracht werden, kann die Einhausung 2, 2' einzelne oder mehrere Erweiterungen 18 aufweisen, um das Gesamtvolumen der keimarmen Zone 1, 1' insgesamt nicht zu groß werden zu lassen.

Die Wände 15, 15', 16, 16' und Decken 17, 17', 18, 18' von Außen- und Innengehäuse 3, 3', 5, 5' können aus Metall oder Kunststoff bestehen, beispielsweise aus Edelstahl oder Plexiglas. Darüber hinaus können in die Wände 15, 15', 16, 16' und Decken 17, 17', 18, 18' auch Absperreinrichtungen wie Türen, Klappen, Rollos und dergleichen eingebracht sein, um einen Zugriff auf Maschinen und Behälter zu ermöglichen, beispielsweise zu Wartungszwecken oder im Falle von Produktionsunterbrechungen.

Im gezeigten Ausführungsbeispiel ist die gesamte Einhausung 2, 2' mit Füßen 20, 20', 21, 21' auf eine Aufstellfläche 11 gestellt. Außen- und Innengehäuse 3, 3', 5, 5' sind hierdurch von der Aufstellfläche 11 beabstandet und bilden einen umlaufenden Schleusenraum 4, 4', der sich nach oben bis zur Decke 17, 17' des Außengehäuses 3, 3' erstreckt und nach unten, zur Aufstellfläche 11 hin, offen ist. Diese Öffnung stellt die Ansaugöffnung 8, 8' dar, durch die Behandlungsmedium aus der keimarmen Zone 1, 1' und zugleich Luft aus der äußeren Umgebung des Außengehäuses 3, 3' in den Schleusenraum 4, 4' gelangen und abgesaugt werden kann. Die Pfeile verdeutlichen den Strömungsverlauf. Die Aufstellfläche 11 ist vorzugsweise der Boden des Aufstellortes. Denkbar ist auch, eine Grundplatte zu verwenden, die zumindest teilweise die Aufstellfläche 11 ausbildet.

Eine Absaugung von Behandlungsmedium und Luft durch den Schleusenraum 4, 4' erfolgt mittels einer Absaugvorrichtung 10, 10', die über eine Absaugpumpe 13, 13' verfügt und am oberen Ende 12, 12' des Schleusenraums 4, 4' angeordnet ist.

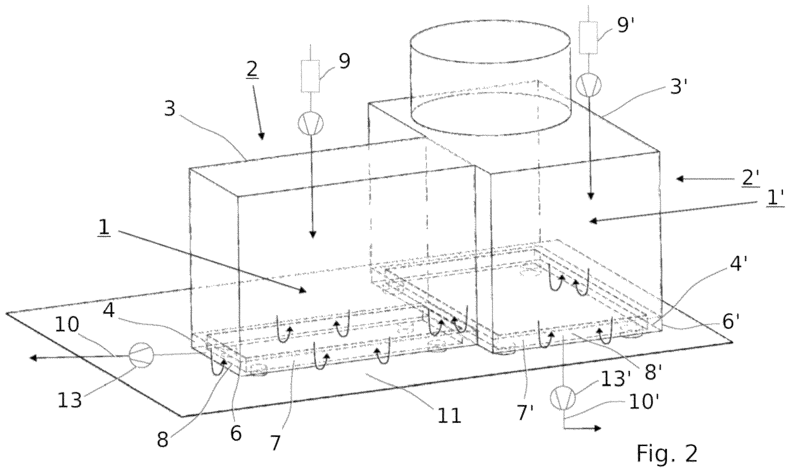

Fig. 2 zeigt ebenfalls zwei Einhausungen 2, 2' mit jeweils einem Schleusenraum 4, 4' nach einer nicht erfindungsgemäßen Ausführung. Der Schleusenraum 4, 4' ist in diesem Ausführungsbeispiel am unteren Ende 6, 6' des Außengehäuses 3, 3' durch einen Kanal 7, 7' ausgebildet. Der Kanal 7, 7' ist zur keimarmen Zone 1, 1' hin geschlossen, nach unten, zur Aufstellfläche 11 hin, wiederum offen. Wie im Ausführungsbeispiel nach Fig. 1 kann auch hier durch die Ansaugöffnung 8, 8' Behandlungsmedium aus der keimarmen Zone 1, 1' und zugleich Luft aus der äußeren Umgebung des Außengehäuses 3, 3' in den Schleusenraum 4, 4' gelangen und abgesaugt werden. Eine Absaugvorrichtung 10, 10' mit Absaugpumpe 13, 13' ist seitlich am Außengehäuse 3, 3' bzw. dem Kanal 7, 7' angeordnet. Die Absaugung kann aber von der Oberseite des Kanals 7, 7' über entsprechende Absaugleitungen durch die Einhausungen 2, 2' hindurch erfolgen.

In beiden Ausführungsbeispielen gemäß den Figuren 1 und 2 ist eine Filtervorrichtung 9, 9' vorgesehen, über die ein gasförmiges Behandlungsmedium sterilisiert und anschließend mittels einer Pumpe 21, 21' in die keimarme Zone 1, 1' gefördert werden kann. Je nach Art der in der keimarmen Zone 1, 1' vorhandenen Behandlungsvorrichtung kann die Einleitung der Sterilluft verteilt über mehrere Einlassöffnungen in der Decke 17, 17', 18, 18' des Außengehäuses 3, 3' bzw. des Innengehäuses 5, 5' erfolgen, um eine an die jeweilige Behandlungsvorrichtung angepasste Verdrängerströmung zu erzeugen.

### Bezugszeichenliste

- 1, 1': keimarme Zone
- 2, 2': Einhausung
- 3, 3': Außengehäuse
- 4, 4': Schleusenraum
- 5, 5': Innengehäuse
- 6, 6': Ende
- 7, 7': Kanal
- 8,8': Ansaugöffnung
- 9, 9': Filtervorrichtung
- 10, 10': Absaugvorrichtung
- 11: Aufstellfläche
- 12, 12': Ende
- 13, 13': Absaugpumpe
- 14: Erweiterung
- 15, 15': Wand
- 16, 16': Wand
- 17, 17': Decke
- 18, 18': Decke
- 19, 19': Fuß
- 20, 20': Fuß
- 21, 21': Pumpe

## Patentansprüche

1. Verfahren zur Herstellung und Behandlung steriler Kunststoffbehälter, bei dem Vorformlinge aus einem thermoplastischen Material im Bereich einer Heizstrecke erwärmt und anschließend durch pneumatischen oder hydraulischen Druck zu Behältern umgeformt werden, und wobei die Vorformlinge oder die Behälter oder beide sterilisiert werden und mindestens eine keimarme Zone (1, 1') durchlaufen, die von einer Einhausung (2, 2') umgeben ist, wobei die Einhausung (2, 2') ein Außengehäuse (3, 3') sowie einen Schleusenraum (4, 4') aufweist, durch den Behandlungsmedium aus der keimarmen Zone (1, 1') und zugleich Luft aus der äußeren Umgebung des Außengehäuses (3, 3') abgesaugt werden, **dadurch gekennzeichnet, dass** der Schleusenraum (4, 4') zwischen dem Außengehäuse (3, 3') und einem Innengehäuse (5, 5') der Einhausung (2, 2') ausgebildet ist.

2. Verfahren nach Anspruch 1, **dadurch gekennzeichnet, dass** der Schleusenraum (4, 4') eine nach unten gerichtete Ansaugöffnung (8, 8') aufweist.

3. Verfahren nach Anspruch 1 oder 2, **dadurch gekennzeichnet, dass** ein gasförmiges Behandlungsmedium über eine Filtervorrichtung (9, 9') sterilisiert und anschließend in die keimarme Zone (1, 1') geleitet wird.

4. Anlage zur Herstellung und Behandlung steriler Kunststoffbehälter, bei dem Vorformlinge aus einem thermoplastischen Material im Bereich einer Heizstrecke erwärmt und anschließend durch pneumatischen oder hydraulischen Druck zu Behältern umgeformt werden, und wobei die Vorformlinge oder die Behälter oder beide sterilisiert werden und mindestens eine keimarme Zone (1, 1') durchlaufen, die von einer Einhausung (2, 2') umgeben ist, wobei die Einhausung (2, 2') ein Außengehäuse (3, 3') sowie einen Schleusenraum (4, 4') mit einer Ansaugöffnung (8, 8') aufweist, die derart positioniert ist, dass mittels einer Absaugvorrichtung (10, 10'), die mit dem Schleusenraum (4, 4') verbunden ist, Behandlungsmedium aus der keimarmen Zone (1, 1') und zugleich Luft aus der äußeren Umgebung des Außengehäuses (3, 3') durch den Schleusenraum (4, 4') abgesaugt werden kann, **dadurch gekennzeichnet, dass** der Schleusenraum (4, 4') zwischen dem Außengehäuse (3, 3') und einem Innengehäuse (5, 5') ausgebildet ist.

5. Anlage nach Anspruch 4, **dadurch gekennzeichnet, dass** die Anlage eine Filtervorrichtung (9, 9') aufweist, über die ein gasförmiges Behandlungsmedium sterilisiert und anschließend in die keimarme Zone (1, 1') gefördert wird.

6. Anlage nach Anspruch 4 oder 5, **dadurch gekennzeichnet, dass** die Ansaugöffnung (8, 8') des Schleusenraums (4, 4') nach unten zu einer Aufstellfäche (11) hin gerichtet ist.

7. Anlage nach einem der Ansprüche 4 bis 6, **dadurch gekennzeichnet, dass** in der keimarmen Zone (1, 1') eine oder mehrere Behandlungsstationen zur Behandlung der Vorformlinge und/oder der Kunststoffbehälter untergebracht sind.

## Claims

1. Method for the production and treatment of sterile plastic containers, in which preforms made of a thermoplastic material are heated in the region of a heating section and then formed into containers by pneumatic or hydraulic pressure, and wherein the preforms or the containers or both are sterilised and pass through at least one low-germ zone (1, 1') which is surrounded by an enclosure (2, 2'), the enclosure (2, 2') having an outer housing (3, 3') and an airlock chamber (4, 4'), through which treatment medium is extracted from the low-germ zone (1, 1') and at the same time air is extracted from the outer environment of the outer housing (3, 3'), **characterised in that** the airlock chamber (4, 4') is formed between the outer housing (3, 3') and an inner housing (5, 5') of the enclosure (2, 2').

2. Method according to claim 1, **characterised in that** the airlock chamber (4, 4') has a downwardly directed intake opening (8, 8').

3. Method according to claim 1 or 2, **characterised in that** a gaseous treatment medium is sterilised via a filter device (9, 9') and then fed into the low-germ zone (1, 1').

4. Installation for the production and treatment of sterile plastic containers, in which preforms made of a thermoplastic material are heated in the region of a heating section and subsequently formed into containers by pneumatic or hydraulic pressure, and wherein the preforms or the containers or both are sterilised and pass through at least one low-germ zone (1, 1') which is surrounded by an enclosure (2, 2'), wherein the enclosure (2, 2') comprises an outer housing (3, 3') and an airlock chamber (4, 4') with an intake opening (8, 8'), which is positioned in such a way that by means of a suction device (10, 10'), which is connected to the airlock chamber (4, 4'), treatment medium from the low-germ zone (1, 1') and at the same time air from the outer environment of the outer housing (3, 3') can be extracted through the airlock chamber (4, 4'), **characterised in that** the airlock chamber (4, 4') is formed between the outer housing (3, 3') and an inner housing (5, 5').

5. Installation according to claim 4, **characterised in that** the system has a filter device (9, 9') via which a gaseous treatment medium is sterilised and then conveyed into the low-germ zone (1, 1').

6. Installation according to claim 4 or 5, **characterised in that** the suction opening (8, 8') of the airlock chamber (4, 4') is directed downwards towards an installation surface (11).

7. Installation according to one of claims 4 to 6, **characterised in that** one or more treatment stations for treating the preforms and/or the plastic containers are accommodated in the low-germ zone (1, 1').

## Revendications

1. Procédé de fabrication et de traitement de récipients stériles en matière plastique, dans lequel des préformes en un matériau thermoplastique sont chauffées dans la zone d'une section de chauffage et sont ensuite transformées en récipients par pression pneumatique ou hydraulique, et dans lequel les préformes ou les récipients ou les deux sont stérilisés et traversent au moins une zone pauvre en germes (1, 1'), qui est entourée d'une enceinte (2, 2'), l'enceinte (2, 2') présentant un boîtier extérieur (3, 3') ainsi qu'un espace du sas (4, 4') à travers lequel le milieu de traitement est aspiré de la zone pauvre en germes (1, 1') et en même temps l'air est aspiré de l'environnement extérieur du boîtier extérieur (3, 3'), **caractérisé en ce que** l'espace du sas (4, 4') est formé entre le boîtier extérieur (3, 3') et un boîtier intérieur (5, 5') de l'enceinte (2, 2').

2. Procédé selon la revendication 1, **caractérisé en ce que** l'espace du sas (4, 4') présente une ouverture d'aspiration (8, 8') orientée vers le bas.

3. Procédé selon la revendication 1 ou 2, **caractérisé en ce qu'**un milieu de traitement gazeux est stérilisé par l'intermédiaire d'un dispositif de filtration (9, 9') et est ensuite envoyé dans la zone pauvre en germes (1, 1').

4. Installation pour la fabrication et le traitement de récipients stériles en matière plastique, dans laquelle des préformes en un matériau thermoplastique sont chauffées dans la zone d'une section de chauffage et sont ensuite transformées en récipients par pression pneumatique ou hydraulique, et dans laquelle les préformes ou les récipients ou les deux sont stérilisés et traversent au moins une zone pauvre en germes (1, 1') qui est entourée d'une enceinte (2, 2'), l'enceinte (2, 2') comprenant un boîtier extérieur (3, 3') ainsi qu'un espace de sas (4, 4') avec une ouverture d'aspiration (8, 8') qui est positionnée de telle sorte qu'au moyen d'un dispositif d'aspiration (10, 10') qui est relié à l'espace du sas (4, 4'), le milieu de traitement est extrait de la zone pauvre en germes (1, 1') et, en même temps, de l'air de l'environnement extérieur du boîtier extérieur (3, 3') peut être aspiré à travers l'espace de sas (4, 4'), **caractérisé en ce que** l'espace de sas (4, 4') est formé entre le boîtier extérieur (3, 3') et un boîtier intérieur (5, 5').

5. Installation selon la revendication 4, **caractérisée en ce que** l'installation comporte un dispositif de filtration (9, 9') par lequel un milieu de traitement gazeux est stérilisé puis transporté dans la zone pauvre en germes (1, 1').

6. Installation selon la revendication 4 ou 5, **caractérisée en ce que** l'ouverture d'aspiration (8, 8') de l'espace du sas (4, 4') est orientée vers le bas en direction d'une surface d'installation (11).

7. Installation selon l'une des revendications 4 à 6, **caractérisée en ce que** la zone pauvre en germes (1, 1') abrite un ou plusieurs postes de traitement pour le traitement des préformes et/ou des récipients en matière plastique.
